# EUROPEAN PATENT APPLICATION

(11) **EP 4 462 051 A1**
(43) Date of publication of application: **13.11.2024**
(21) Application number: 22925509.6
(22) Date of filing: 11.03.2022
(51) Int. Cl.: F26B 15/18, F26B 21/00, F26B 25/02, F26B 23/00

(54) **DRYING APPARATUS AND ELECTRODE SHEET DRYING DEVICE**

(30) Priority: 08.02.2022 CN 202220254497 U
(71) Applicant: Contemporary Amperex Technology Co., Limited, Ningde, Fujian 352100 (CN)
(72) Inventor: YANG, Guozhong, Ningde, Fujian 352100 (CN); SUN, Xiangli, Ningde, Fujian 352100 (CN); LI, Fengdan, Ningde, Fujian 352100 (CN); YANG, Chao, Ningde, Fujian 352100 (CN); WU, Xiaoping, Ningde, Fujian 352100 (CN)
(74) Representative: Rowlands, Stuart Michael
(86) International application number: PCT/CN2022/080447
(87) International publication number: WO 2023/151147

(57) **Abstract**

The present application relates to the technical field of drying, and in particular, relates to a drying apparatus and an electrode sheet drying device. The drying apparatus comprises: a drying oven; a conveying belt passing through the drying oven, a member to be dried being provided on one side of the conveying belt, and the conveying belt being used for conveying the member; and an air blowing mechanism, arranged on the side of the member away from the conveying belt and used for blowing air to the member, so that the member is attached to the conveying belt. By using the mode, in the present application, a member to be dried can conveniently and safely pass through the drying apparatus, and then the production efficiency of the member can be guaranteed.

## Description

### CROSS-REFERENCE TO RELATED APPLICATIONS

This application claims priority to Chinese patent application No. 202220254497.X, filed on February 08, 2022 and entitled "DRYING APPARATUS AND ELECTRODE PLATE DRYING EQUIPMENT", which is incorporated herein by reference in its entirety.

### TECHNICAL FIELD

This application relates to the field of drying technologies and specifically to a drying apparatus and electrode plate drying equipment.

### BACKGROUND

In the production process of battery electrode plates, it is necessary to first apply an active material on a substrate, and then make the substrate pass through a drying apparatus for drying to form an electrode plate.

Before drying the substrate coated with the material, it is necessary to manually pass the substrate through the drying apparatus and then connect the substrate to a winding shaft. In this way, the substrate is pulled by the winding shaft to move inside the drying apparatus for drying. Due to high temperature inside the drying apparatus, manually making the substrate pass through the drying apparatus easily causes a risk of scalding, while waiting for temperature inside an oven to decrease before making the substrate pass through the drying apparatus reduces the production efficiency of the electrode plate, affecting production capacity of the electrode plate.

### SUMMARY

In view of the above problems, this application provides a drying apparatus and electrode plate drying equipment, so as to make a component to be dried pass through the drying apparatus conveniently and safely, thereby guaranteeing the production efficiency of the component to be dried.

According to an aspect of this application, a drying apparatus is provided, configured to dry a component to be dried and including: an oven; a conveyor belt, where the conveyor belt passes through the oven, the component to be dried is placed on a side of the conveyor belt, and the conveyor belt is configured to convey the component to be dried; and a blowing mechanism provided on a side of the component to be dried away from the conveyor belt and configured to blow gas onto the component to be dried to make the component to be dried abut against the conveyor belt; where the conveyor belt is a steel sheet.

The drying apparatus provided in this application has the conveyor belt arranged passing through the oven and the component to be dried placed on a side of the conveyor belt. In this way, the conveyor belt, when moving, drives a substrate to move and pass through the oven for drying, and at the same time, the conveyor belt also provides support for the component to be dried, thereby effectively reducing the tension on the component to be dried, guaranteeing the flatness of a coating on a surface of the component to be dried after drying. For the drying of electrode plates, the produced electrode plates can have good charge and discharge performance. Moreover, with the conveyor belt arranged passing through the oven, when the belt is to be threaded, a front portion of the component to be dried can be fixed to a side of the conveyor belt outside the oven, and then the component to be dried is driven by the conveyor belt to pass through the oven, without the need for manually making the component to be dried pass through the oven, which avoids the risk of scalding, and removes the need to lower the temperature of the oven, effectively guaranteeing the production efficiency of the component to be dried.

In some embodiments, the drying apparatus includes a drive mechanism; and the drive mechanism includes at least two drive rollers, where the steel sheet is connected to surfaces of the drive rollers in an annular manner, and the drive rollers, when rotating, drive the steel sheet to perform conveying. The steel sheet conveying the component to be dried can guarantee the support effect for the component to be dried. When the component to be dried is an electrode plate, the steel sheet can stably support a substrate of the electrode plate, effectively reducing the tension requirement of the substrate, ensuring that the coating applied on the substrate is not susceptible to warping, wrinkling, cracking, or the like in the drying process, and also avoiding fracture of the substrate which otherwise affects the production efficiency of the electrode plate. Provision of at least two drive rollers can not only ensure that the steel sheet is supported and stretched on two sides, guaranteeing the flatness of the steel sheet, thereby guaranteeing the flatness of the component to be dried on the steel sheet, but can also allow the rotation of the drive rollers to drive the steel sheet to move, thereby implementing movement and drying of the component to be dried in the oven.

In some embodiments, the drying apparatus includes a drive mechanism; and the drive mechanism includes a winding shaft and an unwinding shaft respectively provided at two ends outside the oven, where the steel sheet is wound around the winding shaft and the unwinding shaft, and the winding shaft and the unwinding shaft, when rotating, drive the steel sheet to perform conveying. By providing the winding shaft and the unwinding shaft respectively at two ends outside the oven, the entire steel sheet is in the form of a strip and passes through the oven, which optimizes the overall structure of the conveyor belt, reduces the space occupied by the drying apparatus, and thereby facilitates the layout of the drying apparatus on the production line.

In some embodiments, the steel sheet is provided with through holes. Since the steel sheet is a metal structure, it has poor flexibility. When the steel sheet is arranged as an annular structure, it may be difficult for the steel sheet to bend and also difficult to guarantee the flatness at a bending part. Provision of the through holes in the steel sheet can appropriately reduce the stiffness of the steel sheet, making it easier for the steel sheet to bend, and guaranteeing the flatness at a bending part, thereby guaranteeing the flatness of the component to be dried conveyed and supported by the steel sheet. In addition, when the component to be dried is attached to the steel sheet and there is gas retained between contact surfaces of the component to be dried and the steel sheet, the provision of the through holes in the steel sheet allows the gas retained between the contact surfaces of the component to be dried and the steel sheet to be released through the through holes, thereby guaranteeing the flatness of the component to be dried on the steel sheet.

In some embodiments, the blowing mechanism is provided with a heater inside, and the heater is configured to heat the gas. Provision of the heater inside the blowing mechanism allows the blowing mechanism to blow hot air onto the component to be dried, thereby accelerating the drying speed for the coating on the surface of the component to be dried. For electrode plates, the production efficiency of electrode plates can be effectively improved, thereby satisfying requirements on the production capacity of electrode plates.

In some embodiments, the drying apparatus further includes a heating mechanism, and the heating mechanism is disposed on a side of the conveyor belt away from the component to be dried and configured to transfer heat to the conveyor belt to heat the component to be dried. By providing the heating mechanism on the side of the conveyor belt away from the component to be dried, and given that the conveyor belt is a steel sheet with thermal conductivity, heat emitted by the heating mechanism can be transferred to the component to be dried through the conveyor belt, and the heat is transferred from an inner layer of the coating to an outer layer of the coating. In this way, after the outer layer of the coating is dried, it can be ensured that the inner layer of the coating is also dried, hereby improving the success rate of drying the component to be dried, and reducing the waste of resources.

In some embodiments, the heating mechanism is covered with a heat preservation cover outside, and the heat preservation cover is provided with an opening on a side facing the conveyor belt to transfer heat to the conveyor belt. Since the blowing mechanism at the top of the oven blows gas onto the component to be dried, the gas, when flowing in the oven, takes away the heat around the heating mechanism. Based on this, the heat preservation cover is provided outside the heating mechanism, so that more of the heat emitted by the heating mechanism is retained inside the heat preservation cover, and the heat preservation cover isolates the external airflow from the internal heat, to prevent the gas from taking away the heat around the heating mechanism and causing decrease in the drying efficiency for the component to be dried. At the same time, providing the opening on the side of the heat preservation cover facing the conveyor belt allows more of the heat retained inside the heat preservation cover to be transferred toward the conveyor belt, thereby further increasing the drying speed for the component to be dried on the conveyor belt.

In some embodiments, the oven is provided with a gas return port at a position opposite the blowing mechanism, and the gas return port is connected to the blowing mechanism via a gas return mechanism to allow the gas blown into the oven by the blowing mechanism to flow back into the blowing mechanism. The oven is provided with the gas return port at the position opposite the blowing mechanism, and the gas return port is connected to the blowing mechanism via the gas return mechanism, so that the gas blown onto the component to be dried by the blowing mechanism can return to the blowing mechanism through the gas return mechanism to form circulating airflow, thereby accelerating the speed of gas flow and increasing the drying speed while reducing the consumption of gas and reducing costs.

In some embodiments, the gas return mechanism is provided with a condenser inside, and the condenser is configured to condense water vapor in the gas return mechanism. During the process of heating up and drying the coating on the surface of the component to be dried, part of the moisture in the coating is evaporated to form water vapor. Too much water vapor in the circulating airflow affects the subsequent drying speed for the component to be dried. Based on this, provision of the condenser inside the gas return mechanism allows the water vapor in the gas that returns to the gas return mechanism to be condensed into liquid water and collected by the condenser, thereby decreasing the water vapor in the gas that returns to the blowing mechanism and blows onto the component to be dried, and guaranteeing the drying speed and drying effect for the component to be dried.

In some embodiments, a cleaning mechanism is provided at a position downstream of the oven on a conveying path of the conveyor belt, and the cleaning mechanism is configured to clean the conveyor belt. Providing the cleaning mechanism at the position downstream of the oven on the conveying path of the conveyor belt allows the coating falling onto or adhered to the conveyor belt due to excessive drying to be cleaned off by the cleaning mechanism, guaranteeing the cleanliness on a surface of the conveyor belt, thereby guaranteeing the flatness of the component to be dried when the conveyor belt subsequently supports and conveys the component to be dried.

In some embodiments, the cleaning mechanism includes a cleaning tank and a pressing structure, and the pressing structure abuts against the conveyor belt to press the conveyor belt into the cleaning tank. The pressing structure abutting against the conveyor belt to press the conveyor belt into the cleaning tank allows for full clean of the conveyor belt, guaranteeing the cleanliness on the surface of the conveyor belt during subsequent conveying, and in turn providing good support and conveying conditions for the component to be dried.

In some embodiments, a drying mechanism is provided at a position downstream of the cleaning mechanism on the conveying path, and the drying mechanism is configured to dry the conveyor belt. Provision of the drying mechanism at the position downstream of the cleaning mechanism on the conveying path of the conveyor belt allows the liquid on the cleaned conveyor belt to be blown dry or evaporated by heating when passing through the drying mechanism, thereby avoiding subsequent adverse effects on the component to be dried placed on the conveyor belt due to the residual liquid on the surface of the conveyor belt, for example, unevenness on the surface of the component to be dried due to the residual liquid between the contact surfaces of the component to be dried and the conveyor belt, and slow drying speed for the coating due to the residual liquid between the contact surfaces of the component to be dried and the conveyor belt.

According to another aspect of this application, electrode plate drying equipment is provided, including the drying apparatus according to any one of the foregoing embodiments, where the component to be dried is an electrode plate.

The electrode plate drying equipment provided in this application has the conveyor belt arranged passing through the oven and a substrate of an electrode plate placed on a side of the conveyor belt. In this way, the conveyor belt, when moving, drives the substrate of the electrode plate to move and pass through the oven for drying. At the same time, the conveyor belt also provides support for the substrate of the electrode plate, thereby effectively reducing the tension on the substrate of the electrode plate, guaranteeing the flatness of a coating on a surface of the substrate of the electrode plate after drying, and allowing for good charge and discharge performance of the produced electrode plate. Moreover, the conveyor belt being arranged to pass through the oven allows a front portion of the substrate of the electrode plate to be fixed to a side of the conveyor belt outside the oven, and then the substrate of the electrode plate is driven by the conveyor belt to pass through the oven, without the need for manually making the substrate of the electrode plate pass through the oven, thereby avoiding the risk of scalding, and removing the need to lower the temperature of the oven, effectively guaranteeing the production efficiency of the electrode plate. In addition, the blowing mechanism is provided on the side of the substrate of the electrode plate away from the conveyor belt. The blowing mechanism blowing gas onto the substrate of the electrode plate can not only accelerate the drying speed for an active material on the substrate of the electrode plate, but can also allow the substrate of the electrode plate to tightly abut against the conveyor belt, guaranteeing the flatness of the substrate of the electrode plate, while making the active material on the surface of the substrate of the electrode plate be subjected to the pressure of the gas to remain flat during the drying process, effectively avoiding warping, wrinkling, cracking, and the like of the active material during drying which otherwise affects the performance of the electrode plate in subsequent operations.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. Moreover, throughout the accompanying drawings, like reference signs denote like components. In the accompanying drawings:
FIG. 1 is a schematic structural exploded view of a battery cell according to an embodiment of this application;
FIG. 2 is a schematic structural perspective view from a side of a drying apparatus according to an embodiment of this application;
FIG. 3 is a schematic structural perspective view from a side of a drying apparatus according to another embodiment of this application;
FIG. 4 is a schematic structural vertical view of part of a conveyor belt in a drying apparatus according to an embodiment of this application;
FIG. 5 is a schematic structural perspective view from a side of the inside of an oven in a drying apparatus according to an embodiment of this application;
FIG. 6 is a schematic structural perspective view from top of an oven and a conveyor belt in a drying apparatus according to an embodiment of this application; and
FIG. 7 is a schematic three-dimensional structural diagram of a drying apparatus according to an embodiment of this application.

Reference signs in specific embodiments are described as follows:
battery cell 20; end cover 21; electrode terminal 21a; housing 22; electrode assembly 23; tab 23a;
drying apparatus 500; oven 510; gas return port 511; conveyor belt 520; steel sheet 521; through hole 5211; drive roller 522; winding shaft 523; unwinding shaft 524; blowing mechanism 530; heater 531; heating mechanism 540; heat preservation cover 550; opening 551; gas return mechanism 560; exhaust fan 561; condenser 562; condensation structure 5621; collection structure 5622; cleaning mechanism 570; cleaning tank 571; pressing structure 572; drying mechanism 580; and
component to be dried 600.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the technical terms "first", "second", and the like are merely intended to distinguish between different objects, and shall not be understood as any indication or implication of relative importance or any implicit indication of the number, sequence, or primary-secondary relationship of technical features indicated. In the descriptions of the embodiments of this application, "multiple" means at least two, unless otherwise specifically defined.

In this specification, reference to "embodiment" means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of A, presence of both A and B, and presence of B. In addition, the character "/" in this specification generally indicates an "or" relationship between contextually associated objects.

In the description of the embodiments of this application, the term "a plurality of means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in the embodiments of this application as appropriate to specific situations.

Currently, from the perspective of market development, application of batteries is being more extensive. Batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of batteries, market demands for batteries are also increasing. Batteries perform charge and discharge operations through internal electrode plates, and the production capacity of electrode plates directly affects the production capacity of batteries.

In the production process of electrode plates, it is necessary to first apply an active material on a substrate (for example, a current collector), and then make the substrate coated with the active material pass through a drying apparatus for drying to form an electrode plate. Before drying the substrate coated with the material, a front portion of the substrate is manually passed through the drying apparatus and then the substrate is connected to a winding shaft. In this way, the winding shaft rotates and pulls the substrate to move inside the drying apparatus for drying.

To ensure sufficient heat inside the drying apparatus to allow the the coating on a surface of the substrate to be completely dried after passing through the drying apparatus, the internal space of the drying apparatus is generally set to be small, so manually making the substrate pass through the drying apparatus easily causes a risk of scalding. Sometimes, to avoid the risk of scalding, it is necessary to wait for temperature of an oven to decrease before making the substrate pass through the drying apparatus, which leads to a waste of time and cost, causing insufficient production capacity of electrode plates.

Based on the above problems, this application proposes a drying apparatus. With a conveyor belt arranged to pass through an oven and a component to be dried placed on a side of the conveyor belt, when the belt is to be threaded, the component to be dried can be adhered and fixed to a side of the conveyor belt outside the oven. In this way, the conveyor belt, when moving, drives the component to be dried to move and pass through the oven for drying, without the need to manually pass the substrate pass through the oven, thereby avoiding the risk of scalding, and removing the need to lower the temperature of the oven, effectively guaranteeing the production efficiency of the component to be dried. In addition, a blowing mechanism is provided on a side of the component to be dried away from the conveyor belt. The blowing mechanism blowing gas onto the component to be dried can not only accelerate the drying speed for the component to be dried, but also allow the component to be dried to tightly abut against the conveyor belt, guaranteeing the flatness of the component to be dried.

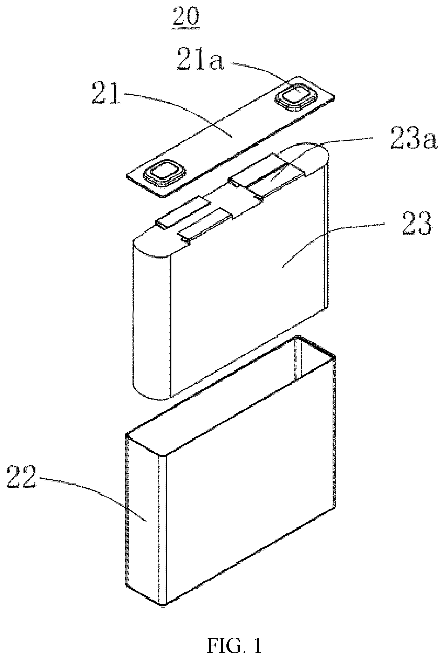

Referring to FIG. 1, FIG. 1 is a schematic structural exploded view of a battery cell 20 according to some embodiments of this application. The battery cell 20 is a smallest element constituting a battery. As shown in FIG. 1, the battery cell 20 includes an end cover 21, a housing 22, an electrode assembly 23, and other functional components.

The end cover 21 refers to a component that covers an opening of the housing 22 to isolate an internal environment of the battery cell 20 from an external environment. A shape of the end cover 21 is not limited and may be adapted to a shape of the housing 22 to fit the housing 22. Optionally, the end cover 21 may be made of a material with certain hardness and strength (for example, aluminum alloy), so that the end cover 21 is less likely to deform when subjected to extrusion and collision, allowing the battery cell 20 to have higher structural strength and enhanced safety performance. Certainly, the end cover 21 may also be made of various materials such as copper, iron, aluminum, stainless steel, aluminum alloy, and plastic. This is not particularly limited in the embodiments of this application. The end cover 21 may be provided with functional components such as an electrode terminal 21a. The electrode terminal 21a may be configured to be electrically connected to the electrode assembly 23 for outputting or inputting electrical energy of the battery cell 20. In some embodiments, the end cover 21 may also be provided with a pressure relief mechanism configured to relieve internal pressure when the internal pressure or temperature in the battery cell 20 reaches a threshold. In some embodiments, an insulator may also be provided at an inner side of the end cover 21. The insulator may be configured to insulate an electrical connection component in the housing 22 from the end cover 21 to reduce the risk of short circuit. For example, the insulator may be made of plastic, rubber, or the like.

The housing 22 is an assembly configured to form an internal environment of the battery cell 20 together with the end cover 21, where the formed internal environment may be used for accommodating the electrode assembly 23, an electrolyte, and other components. The housing 22 and the end cover 21 may be independent components, and an opening may be provided in the housing 22, so that the end cover 21 can close the opening to form the internal environment of the battery cell 20. Without limitation, the end cover 21 and the housing 22 may alternatively be integrated. The housing 22 may be of various shapes and sizes, for example, a rectangular shape, a cylindrical shape, and a hexagonal prism shape. Specifically, the shape of the housing 22 may be determined based on a specific shape and size of the electrode assembly 23. The housing 22 may be made of various materials such as copper, iron, aluminum, stainless steel, aluminum alloy, and plastic. This is not particularly limited in the embodiments of this application.

The electrode assembly 23 is a component in which electrochemical reactions take place in the battery cell 20. The housing 22 may include one or more electrode assemblies 23. The electrode assembly 23 is mainly formed by winding or stacking a positive electrode plate and a negative electrode plate, and a separator is generally provided between the positive electrode plate and the negative electrode plate. Parts of the positive electrode plate and the negative electrode plate that have active substances constitute a body portion of the electrode assembly 23, while parts of the positive electrode plate and the negative electrode plate that have no active substance separately constitute tabs 23a. A positive electrode tab and a negative electrode tab may both be located at one end of the body portion or be respectively located at two ends of the body portion. During charge and discharge of the battery, a positive electrode active substance and a negative electrode active substance react with the electrolyte, and the tabs 23a are connected to the electrode terminals 21a to form a current loop.

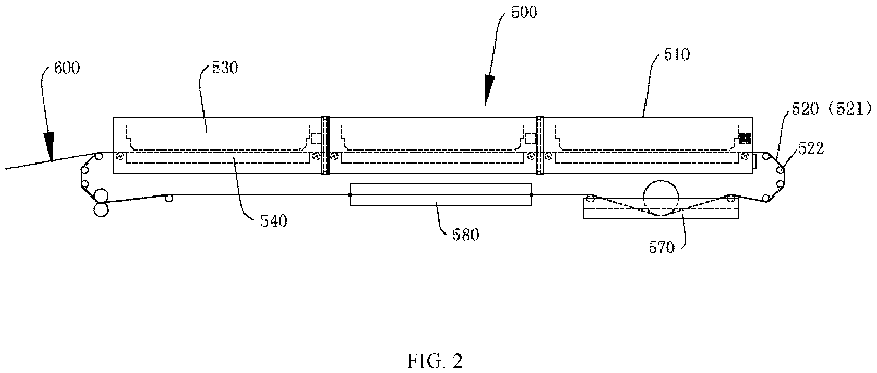

According to an aspect of the embodiments of this application, a drying apparatus 500 is provided. For details, refer to FIG. 2, which shows a side perspective structure of a drying apparatus 500 provided in an embodiment of this application. The drying apparatus 500 is configured to dry a component to be dried 600. The drying apparatus 500 includes an oven 510, a conveyor belt 520, and a blowing mechanism 530. The conveyor belt 520 passes through the oven 510, the component to be dried 600 is placed on a side of the conveyor belt 520, and the conveyor belt 520 is configured to convey the component to be dried 600. The blowing mechanism 530 is disposed on a side of the component to be dried 600 away from the conveyor belt 520 and is configured to blow gas onto the component to be dried 600 to make the component to be dried 600 abut against the conveyor belt 520. The conveyor belt 520 is a steel sheet 521.

The component to be dried 600 may be an electrode plate as shown in FIG. 2, or certainly may be a fabric material with a coating. The component to be dried 600 is not limited herein. For ease of description, the component to be dried 600 being an electrode plate is used as an example for the following description.

The conveyor belt 520 may be an annular belt passing through the oven 510 as shown in FIG. 2, so as to create looped cyclic transmission through driving by drive rollers 522. In some other embodiments, the conveyor belt 520 may alternatively be a linear belt passing through the oven 510, and a winding shaft and an unwinding shaft are provided at two ends outside the oven 510 to implement driving for the conveyor belt 520.

The blowing mechanism 530 is disposed inside the oven 510 and located on the side of the component to be dried 600 away from the conveyor belt 520. The blowing mechanism 530 may communicate with an external blowing pipeline, so as to guide gas in the blowing pipeline and blow the gas onto the component to be dried 600 in the oven 510, making the component to be dried 600 abut against the conveyor belt 520, thereby implementing conveying of the component to be dried 600 by the conveyor belt 520. After the component to be dried 600 is conveyed out of the oven 510, stopping blowing gas to the component to be dried 600 can implement separation of the component to be dried 600 from the conveyor belt 520.

For drying technics of electrode plates, the existing method is to first make a front portion of a substrate pass through the oven 510 and then connect the substrate to a winding shaft. The substrate is in a suspended state in the oven 510. Therefore, when the winding shaft pulls the substrate to move, the tension on the substrate is large, which easily makes a coating on a surface of the substrate be subjected to warping, wrinkling, cracking, or the like during the drying process, or even causes fracture of the substrate in severe cases, thereby affecting the production efficiency of electrode plates and the performance of the electrode plates during subsequent charge and discharge.

Based on the above problems, the drying apparatus 500 provided in this application has the conveyor belt 520 arranged passing through the oven 510 and the component to be dried 600 placed on a side of the conveyor belt 520. In this way, the conveyor belt 520, when moving, drives the component to be dried 600 to move and pass through the oven 510 for drying, and at the same time, the conveyor belt 520 also provides support for the component to be dried 600, thereby effectively reducing the tension on the component to be dried 600, guaranteeing the flatness of a coating on a surface of the component to be dried 600 after drying. For the drying of the electrode plate, the produced electrode plate can have good charge and discharge performance. Moreover, with the conveyor belt 520 arranged passing through the oven 510, when the belt is to be threaded, a front portion of the component to be dried 600 can be fixed to a side of the conveyor belt 520 outside the oven 510, and then the component to be dried 600 is driven by the conveyor belt 520 to pass through the oven 510, without the need for manually making the component to be dried 600 pass through the oven 510, thereby avoiding the risk of scalding, and removing the need to lower the temperature of the oven 510, effectively guaranteeing the production efficiency of the component to be dried 600. In addition, the blowing mechanism 530 is provided on the side of the component to be dried 600 away from the conveyor belt 520. The blowing mechanism 530 blowing gas onto the component to be dried 600 can not only accelerate the drying speed for the component to be dried 600, but can also allow the component to be dried 600 to tightly abut against the conveyor belt 520, guaranteeing the flatness of the component to be dried 600, while making the coating on the surface of the component to be dried 600 be subjected to the pressure of the gas to remain flat during the drying process. For a substrate of the electrode plate, this can effectively avoid warping, wrinkling, cracking, and the like of the coating during drying which otherwise affects the performance of the electrode plate in subsequent operations.

Still refering to FIG. 2, in some embodiments of this application, optionally, the drying apparatus 500 includes a drive mechanism; and the drive mechanism includes at least two drive rollers 522, where the steel sheet 521 is connected to surfaces of the drive rollers 522 in an annular manner, and the drive rollers 522, when rotating, drive the steel sheet 521 to perform conveying.

It should be noted that the steel sheet 521 is preferably formed as an entire annular structure to avoid gap or protrusion on the steel sheet 521 which otherwise causes unevenness of the component to be dried 600 as a whole.

The steel sheet 521 conveying the component to be dried 600 can guarantee the support effect for the component to be dried 600. When the component to be dried 600 is an electrode plate, the steel sheet 521 can stably support a substrate of the electrode plate, effectively reducing the tension requirement of the substrate, ensuring that the coating applied on the substrate is not susceptible to warping, wrinkling, cracking, or the like in the drying process, and also avoiding fracture of the substrate which otherwise affects the production efficiency of the electrode plate. Provision of at least two drive rollers 522 can not only ensure that the steel sheet 521 is supported and stretched on two sides, hence guaranteeing the flatness of the steel sheet 521 and thereby guaranteeing the flatness of the component to be dried 600 on the steel sheet 521, but can also allow the rotation of the drive rollers 522 to drive the steel sheet 521 to move, thereby implementing movement and drying of the component to be dried 600 in the oven 510.

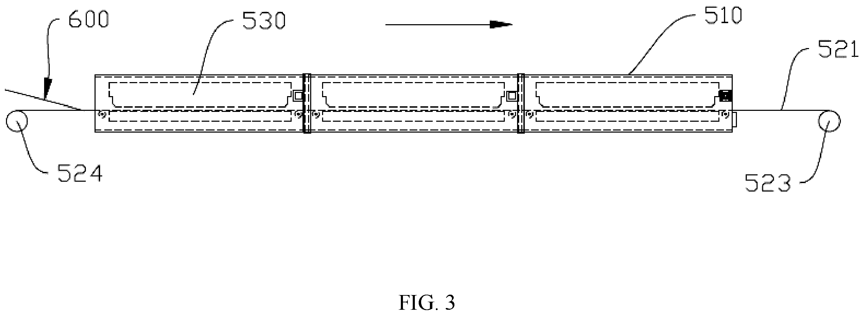

Refer to FIG. 3, which shows a side perspective structure of a drying apparatus 500 according to another embodiment of this application. In some embodiments of this application, optionally, the drying apparatus 500 includes a drive mechanism; and the drive mechanism includes a winding shaft 523 and an unwinding shaft 524 respectively provided at two ends outside the oven 510, where the steel sheet 521 is wound around the winding shaft 523 and the unwinding shaft 524, and the winding shaft 523 and the unwinding shaft 524, when rotating, drive the steel sheet 521 to perform conveying.

Specifically, as shown in FIG. 3, the direction indicated by the arrow in the figure represents a conveying direction of the steel sheet 521, that is, a moving direction of the component to be dried 600 inside the oven 510. The winding shaft 523 is disposed at an end of the oven 510 where the component to be dried 600 is discharged, and the unwinding shaft 524 is disposed at an end of the oven 510 where the component to be dried 600 is fed in. One end of the steel sheet 521 is wound around the unwinding shaft 524, and the other end is connected to the winding shaft 523. When the unwinding shaft 524 and the winding shaft 523 move simultaneously in the clockwise direction, the steel sheet 521 wound on the unwinding shaft 524 is unwound from the unwinding shaft 524 and enters the oven 510, so that the steel sheet 521 coming out of the oven 510 is wound around the winding shaft 523 as the winding shaft 523 rotates. When the steel sheet 521 on the unwinding shaft 524 is completely unwound, the component to be dried 600 may continue to be dried by feeding the component to be dried 600 in a reverse direction (that is, in a direction opposite to the direction indicated by the arrow in the figure), or the winding shaft 523 and the unwinding shaft 524 may be rotated counterclockwise simultaneously, so that the steel sheet 521 is returned to an original position and prepared for a next conveying.

Provision of the winding shaft 523 and the unwinding shaft 524 respectively at two ends outside the oven 510 makes the entire steel sheet 521 be of a strip shape and pass through the oven 510, optimizing the overall structure of the conveyor belt 520, reducing the space occupied by the drying apparatus 500, and thereby facilitating the layout of the drying apparatus 500 on the production line.

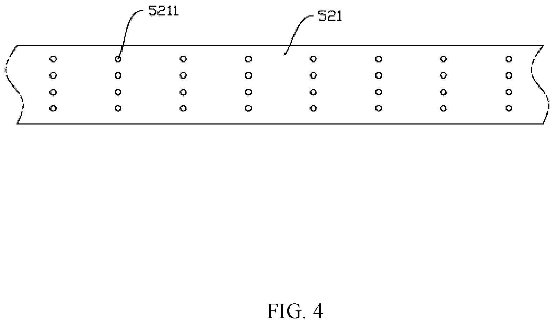

Refer to FIG. 4, which shows a vertical view structure of part of a steel sheet 521 in a drying apparatus 500 according to an embodiment of this application. In some embodiments of this application, optionally, the steel sheet 521 is provided with through holes 5211.

Due to a metal structure, the steel sheet 521 has poor flexibility. When the steel sheet 521 is arranged as an annular structure, it may be difficult for the steel sheet 521 to bend and also difficult to guarantee the flatness at a bending part. Provision of the through holes 5211 in the steel sheet 521 can appropriately reduce the stiffness of the steel sheet 521, making it easier for the steel sheet 521 to bend, and guaranteeing the flatness at a bending part, thereby guaranteeing the flatness of the component to be dried 600 conveyed and supported by the steel sheet 521. In addition, when the component to be dried 600 is attached to the steel sheet 521 and there is gas retained between contact surfaces of the component to be dried 600 and the steel sheet 521, the provision of the through holes 5211 in the steel sheet 521 allows the gas retained between the contact surfaces of the component to be dried 600 and the steel sheet 521 to be released through the through holes 5211, thereby guaranteeing the flatness of the component to be dried 600 on the steel sheet 521.

It should be noted that diameter of the through holes 5211 is preferably less than 5 mm. Since parts of the component to be dried 600 that are on the through holes 5211 cannot be supported, the diameter of the through holes 5211 should not be excessively large. Excessively large diameter easily causes the parts of the component to be dried 600 that are on the through holes 5211 to be pressed into the through holes 5211 when the component to be dried 600 is subjected to the pressure of the gas blown out by the top blowing mechanism 530, thereby affecting the flatness of the component to be dried 600 and a shape of the coating after drying. A specific shape of the through holes 5211 may be circular as shown in FIG. 4, or may be square, oval, triangular, or the like. This is not limited herein.

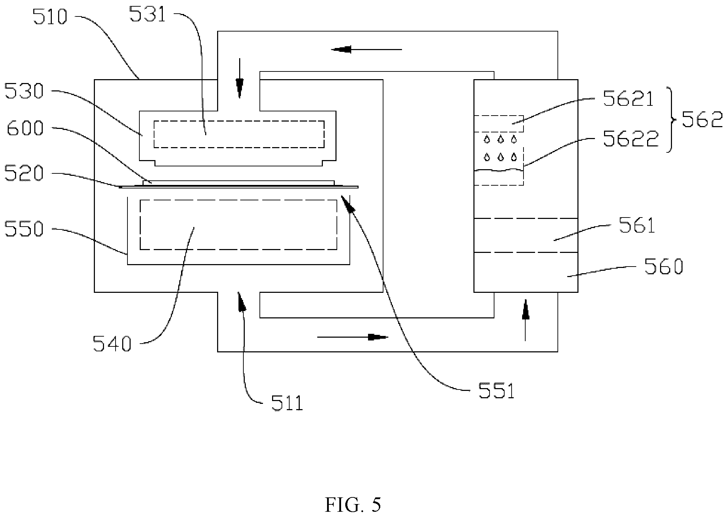

Refer to FIG. 5, which shows a side perspective structure of the inside of an oven 510 in a drying apparatus 500 according to an embodiment of this application. In some embodiments of this application, optionally, the blowing mechanism 530 is provided with a heater 531 inside, and the heater 531 is configured to heat gas inside the blowing mechanism 530.

Specifically, the heater 531 may be a gas heater, and a heating element of the gas heater is a stainless steel electric heating tube. An inner cavity of the heater 531 is provided with multiple baffle plates (guide plates) to guide a direction of gas flow and prolong the retention time of the gas in the inner cavity, thereby fully heating the gas, making the gas evenly heated, and improving the heat exchange efficiency. The stainless steel electric heating tube is formed by inserting electric heating wires into a seamless steel tube, filling void parts with magnesium oxide powder with good thermal conductivity and insulation, and then contracting the tube. When a current passes through a high-temperature resistance wire, the generated heat is diffused to a surface of the heating tube through the crystalline magnesium oxide powder, and then transferred to the gas to be heated, achieving the purpose of heating. It can be understood that in other embodiments, the heater 531 may alternatively be an electromagnetic heater, or the like, as long as it can be ensured that the gas in the blowing mechanism 530 is heated.

Provision of the heater 531 inside the blowing mechanism 530 allows the blowing mechanism 530 to blow hot air onto the component to be dried 600, thereby accelerating the drying speed for the coating on the surface of the component to be dried 600. For electrode plates, the production efficiency of electrode plates can be effectively improved, satisfying requirements on the production capacity of electrode plates.

Still refering to FIGs. 2 and 5, in some embodiments of this application, optionally, the drying apparatus 500 further includes a heating mechanism 540, and the heating mechanism 540 is disposed on a side of the conveyor belt 520 away from the component to be dried 600 and configured to transfer heat to the conveyor belt 520 to heat the component to be dried 600.

Specifically, the conveyor belt 520 may be made of a thermally conductive material such as iron, and the heating mechanism 540 may use electromagnetic heating. Electromagnetic heating is implemented as follows: an alternating magnetic field is generated through a component electronic circuit board; when an iron-containing container is placed in the magnetic field, an alternating current (that is, eddy current) generated at the metal part at the bottom of the container through cutting alternating magnetic lines is gathered on a surface of the container; and the eddy current makes the iron atoms at the bottom of the container irregularly move at high speed, and the atoms collide and rub against each other, generating heat energy, thus achieving the effect of heating an object.

It can be understood that the heating mechanism 540 may also use infrared heating or resistance heating. The heat transfer manner of infrared heating is radiation heat transfer, with energy transferred through electromagnetic waves. When far-infrared rays irradiate a heated object, part of the rays is reflected back, and part of the rays penetrates the object. When the wavelength of the emitted far-infrared rays is consistent with the absorption wavelength of the heated object, the heated object absorbs the far-infrared rays. At this time, molecules and atoms inside the object "resonate", meaning that intense vibration and rotation are generated, and the vibration and rotation cause the temperature of the object to rise, achieving the purpose of heating.

Existing drying equipment generally has a heating mechanism disposed on a side, coated with a coating, of a component to be dried. The inventors of this application have found in research that disposition of the heating mechanism on the side, coated with a coating, of the component to be dried inside the oven causes the temperature of a surface of the coating on the component to be dried to be higher than the temperature inside the coating. This easily leads to a situation where visually, the coating appears to be completely dried when the component to be dried is discharged from the oven, but actually, only the outermost layer of the coating is dried to form a dry film, while the inside of the coating is not completely dried due to lower temperature during drying. Moreover, after the outermost layer of the coating forms a dry film, it is more difficult for heat to reach an inner layer of the coating, resulting in the inside of the coating not being completely dried, which not only causes failure in drying but also renders the entire component to be dried unusable, leading to a waste of resources. In addition, since the temperature of the surface of the coating on the component to be dried is higher than the temperature inside the coating, the outer part of the coating is dried first. In this case, the moisture inside the coating, when coming out, leads to cracking of the outer dry layer of the coating, thereby affecting the drying quality of the electrode plate.

Based on the above problems, with provision of the heating mechanism 540 on the side of the conveyor belt 520 away from the component to be dried 600, since the conveyor belt 520 is a steel sheet 521 and the steel sheet 521 has thermal conductivity, heat emitted by the heating mechanism 540 can be transferred to the component to be dried 600 through the conveyor belt 520, and the heat is transferred from an inner layer of the coating to an outer side of the coating. In this way, after the outer layer of the coating is dried, it can be ensured that the inner layer of the coating is also dried, improving the success rate of drying the component to be dried 600, and reducing the waste of resources. Since the heat emitted by the heating mechanism 540 is transferred through the conveyor belt 520 from the inner layer to outer layer of the coating on the component to be dried 600, the inner layer of the coating on the component to be dried 600 is dried first, and the outer layer is dried later, effectively avoiding problems such as cracking of the coating.

In this application, the provision of the heating mechanism 540 on the side of the conveyor belt 520 away from the component to be dried 600 can prevent slow drying speed on a side of the component to be dried 600 close to the conveyor belt 520 due to obstruction of the conveyor belt 520 which otherwise affects the drying quality.

Further, still refering to FIG. 5, in some embodiments of this application, optionally, the heating mechanism 540 is provided with a heat preservation cover 550 outside, and the heat preservation cover 550 is provided with an opening 551 on a side facing the conveyor belt 520 to transfer heat to the conveyor belt 520.

Since the blowing mechanism 530 in the oven 510 blows gas onto the component to be dried 600, the gas, when flowing in the oven 510, takes away the heat around the heating mechanism 540. Based on this, the heat preservation cover 550 is provided outside the heating mechanism 540, so that more of the heat emitted by the heating mechanism 540 is retained inside the heat preservation cover 550, and the heat preservation cover 550 isolates the external airflow from the internal heat, to prevent the gas from taking away the heat around the heating mechanism 540 and causing decrease in the drying efficiency for the component to be dried 600. At the same time, provision of the opening 551 on the side of the heat preservation cover 550 facing the conveyor belt 520 allows more of the heat retained inside the heat preservation cover 550 to be transferred toward the conveyor belt 520, further increasing the drying speed for the component to be dried 600 on the conveyor belt 520.

Still refering to FIG. 5, in some embodiments of this application, optionally, the oven 510 is provided with a gas return port 511 at a position opposite the blowing mechanism 530, and the gas return port 511 is connected to the blowing mechanism 530 via a gas return mechanism 560 to allow the gas blown into the oven 510 by the blowing mechanism 530 to flow back into the blowing mechanism 530.

As shown in FIG. 5, considering the limited space inside the oven 510, the gas return mechanism 560 may be disposed outside the oven 510 and respectively connected to the blowing mechanism 530 and the gas return port 511 through upper and lower pipelines. An exhaust fan 561 may be provided inside the gas return mechanism 560, so that the gas forms a fast circulation along the direction indicated by the arrow in the figure. It can be understood that when size of the internal space of the oven 510 satisfies the requirements, the gas return mechanism 560 may also be disposed inside the oven 510.

The oven 510 is provided with the gas return port 511 at the position opposite the blowing mechanism 530, and the gas return port 511 is connected to the blowing mechanism 530 via the gas return mechanism 560, so that the gas blown onto the component to be dried 600 by the blowing mechanism 530 can return to the blowing mechanism 530 through the gas return mechanism 560 to form circulating airflow, thereby accelerating the speed of gas flow and increasing the drying speed while reducing the consumption of gas and reducing costs.

Further, still refer to FIG. 5. In some embodiments of this application, the gas return mechanism 560 is provided with a condenser 562 inside, and the condenser 562 is configured to condense water vapor in the gas return mechanism 560.

Specifically, as shown in FIG. 5, the condenser 562 includes a condensation structure 5621 and a collection structure 5622. The condensation structure 5621 is configured to condense the water vapor in the gas passing through the gas return mechanism 560 into liquid water, and the collection structure 5622 is configured to hold the condensed liquid water.

During the process of heating up and drying the coating on the surface of the component to be dried 600, part of the moisture in the coating is evaporated to form water vapor. When there is too much water vapor in the circulating airflow, the water vapor condenses into water droplets on the surface of the component to be dried 600 when encountering the component to be dried 600 with lower temperature, affecting the subsequent drying speed and drying quality for the component to be dried 600. Based on this, provision of the condenser 562 inside the gas return mechanism 560 allows the water vapor in the gas that returns to the gas return mechanism 560 to be condensed into liquid water and collected by the condenser 562, thereby decreasing the water vapor in the gas that returns to the blowing mechanism 530 and blows onto the component to be dried 600, guaranteeing the drying speed and drying effect for the component to be dried 600.

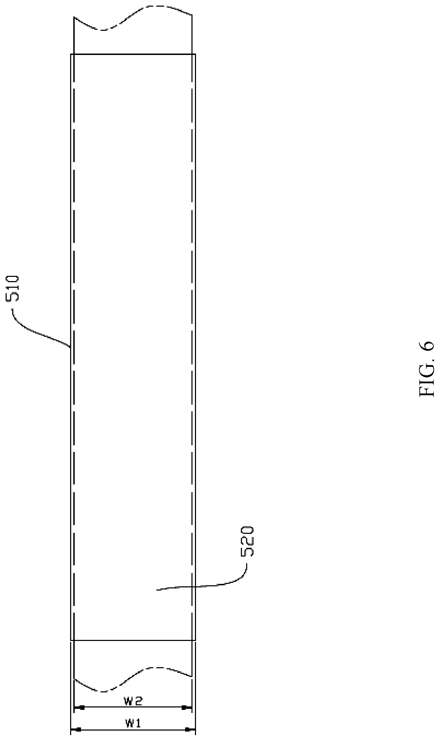

Refering to FIG. 6, which shows a perspective structure from top of a conveyor belt 520 passing through an oven 510 in a drying apparatus 500 according to an embodiment of this application. In some embodiments of this application, optionally, width of the oven 510 is w1, and width of the conveyor belt 520 is w2, satisfying w1 - w2 ≤ 3 cm.

For the substrate of the electrode plate, when drying the substrate, it is necessary to first adjust the temperature inside the oven 510 so that the coating on the surface of the substrate dried by the oven 510 reaches an optimal dried state. During adjustment of the oven 510, it is necessary to first set a temperature value, and then make the substrate coated with the coating pass through the oven 510 for drying. After the substrate comes out of the oven 510, the drying condition of the coating is observed to further determine whether the temperature is appropriate. If the coating is not completely dried, the temperature inside the oven 510 needs to be correspondingly increased. If the coating is excessively dried, the temperature inside the oven 510 needs to be lowered.

Therefore, during adjustment of the oven 510, excessively dried coating easily causes part of the coating to detach from the surface of the substrate and fall inside the oven 510, making the inside of the oven 510 dirty; while cleaning of the oven 510 involves cumbersome steps, leading to significant consumption of labor and time costs.

Based on this, a difference between the width w1 of the oven 510 and the width w2 of the conveyor belt 520 is set to be less than or equal to 3 cm, which not only ensures that the conveyor belt 520 does not rub against an inner wall of the oven 510 and can be smoothly conveyed, but also allows the coating that falls off due to excessive drying during adjustment of drying the electrode plate to fall onto the conveyor belt 520, and allows the fallen coating to be conveyed out of the oven 510 by the conveyor belt 520. This ensures the cleanliness of the inside of the oven 510, hence reducing the frequency of cleaning the oven 510, and thereby reducing costs and consumption.

It should be noted that on the basis of ensuring that the conveyor belt 520 does not rub against an inner wall of the oven 510 and can be normally conveyed, the difference between the width w1 of the oven 510 and the width w2 of the conveyor belt 520 is preferably minimized to the greatest extent, which helps the conveyor belt 520 to bring more of the coating, that falls off due to excessive drying, out of the oven 510.

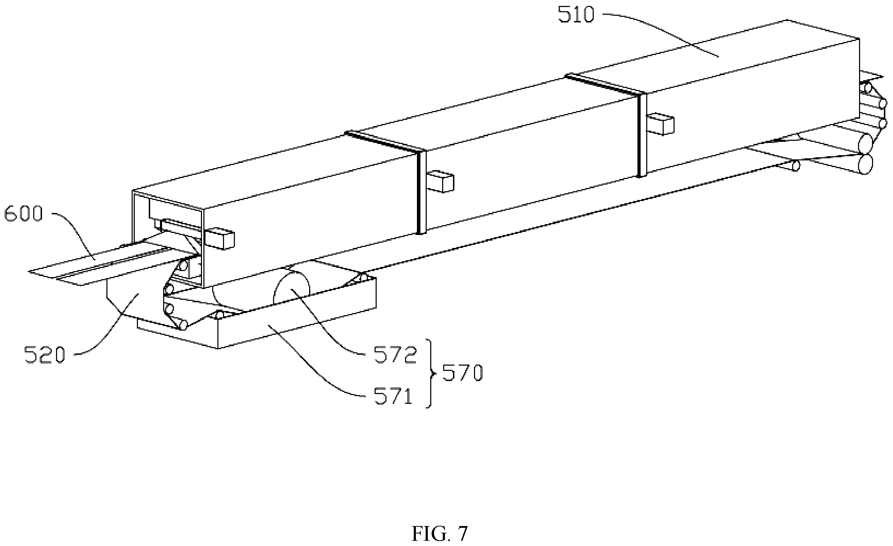

Refer to FIG. 7, which shows a three-dimensional structure of a drying apparatus 500 according to an embodiment of this application. In some embodiments of this application, optionally, a cleaning mechanism 570 is provided at a position downstream of the oven 510 on a conveying path of the conveyor belt 520, and the cleaning mechanism 570 is configured to clean the conveyor belt 520.

Specifically, the cleaning mechanism 570 may be one or a combination of a liquid cleaning mechanism, an ultrasonic cleaning mechanism, and a brush cleaning mechanism.

Provision of the cleaning mechanism 570 at the position downstream of the oven 510 on the conveying path of the conveyor belt 520 allows the coating falling onto or adhered to the conveyor belt 520 due to excessive drying to be cleaned off by the cleaning mechanism 570, guaranteeing the cleanliness on a surface of the conveyor belt 520, thereby guaranteeing the flatness of the component to be dried 600 when the conveyor belt 520 subsequently supports and conveys the component to be dried 600.

Still refer to FIG. 7. In some embodiments of this application, the cleaning mechanism 570 includes a cleaning tank 571 and a pressing structure 572, and the pressing structure 572 abuts against the conveyor belt 520 to press the conveyor belt 520 into the cleaning tank 571.

As shown in FIG. 7, the cleaning tank 571 may hold water or cleaning liquid, and the pressing structure 572 may be a press roller as shown in the figure. The press roller may rotate accordingly with the movement of the conveyor belt 520 to avoid friction between the pressing structure 572 and the conveyor belt 520, which otherwise causes increase in the conveying resistance of the conveyor belt 520, thereby increasing energy consumption. It can be understood that the pressing structure 572 may alternatively be a fixed pressing block, and the pressing block presses the conveyor belt 520 into the cleaning tank 571 for cleaning.

The pressing structure 572 abutting against the conveyor belt 520 to press the conveyor belt 520 into the cleaning tank 571 allows for full clean of the conveyor belt 520, guaranteeing the cleanliness on the surface of the conveyor belt 520 during subsequent conveying, and in turn providing good support and conveying conditions for the component to be dried 600.

Refering again to FIG. 2, in some embodiments of this application, optionally, a drying mechanism 580 is provided at a position downstream of the cleaning mechanism 570 on the conveying path of the conveyor belt 520, and the drying mechanism 580 is configured to dry the conveyor belt 520.

Specifically, the drying mechanism 580 may dry the cleaned conveyor belt 520 through one or a combination of cold air drying, hot air drying, and heat drying.

Provision of the drying mechanism 580 at the position downstream of the cleaning mechanism 570 on the conveying path of the conveyor belt 520 allows the liquid on the cleaned conveyor belt 520 to be blown dry or evaporated by heating when passing through the drying mechanism 580, thereby avoiding subsequent adverse effects on the component to be dried 600 placed on the conveyor belt 520 due to the residual liquid on the surface of the conveyor belt 520, for example, unevenness on the surface of the component to be dried 600 due to the residual liquid between the contact surfaces of the component to be dried 600 and the conveyor belt 520, and slow drying speed for the coating due to the residual liquid between the contact surfaces of the component to be dried 600 and the conveyor belt 520.

Still refering to FIG. 2, It should be noted that to guarantee the drying effect for the coating on the component to be dried 600, in some embodiments, the conveyor belt 520 may pass through multiple arranged ovens 510 at one time, thereby ensuring that the coating on the component to be dried 600 is fully dried. It can be understood that in some other embodiments, the conveyor belt 520 may also pass through only one oven 510, as long as it is ensured that the coating on the component to be dried 600 can be appropriately dried.

According to another aspect of the embodiments of this application, electrode plate drying equipment is provided, including the drying apparatus 500 according to any one of the foregoing embodiments, where the component to be dried 600 is a substrate of an electrode plate.

The electrode plate may be coated on one side or coated on both sides. When a slurry is applied on both sides, one side may be coated and dried first, and after this side is dried, the other side may be coated and dried.

Specifically, during production of the electrode plate, an active material is first applied on a surface of the substrate (for example, a current collector) of the electrode plate using a coating device, and then a front portion of the substrate of the electrode plate coated with the active material is fixed to the conveyor belt 520 at a feeding end outside the oven 510 by bonding, snap-fitting, or the like. The conveyor belt 520 conveys the substrate of the electrode plate coated with the active material and makes it pass through the oven 510 for drying. Then, the conveyor belt 520 conveys the substrate of the electrode plate with the dried active material out of a discharge end of the oven 510 to produce the electrode plate, completing the drying technics of the electrode plate.

The electrode plate drying equipment provided in this application has the conveyor belt 520 arranged passing through the oven 510 and the substrate of the electrode plate placed on a side of the conveyor belt 520. In this way, the conveyor belt 520, when moving, drives the substrate of the electrode plate to move and pass through the oven 510 for drying, and at the same time, the conveyor belt 520 also provides support for the substrate of the electrode plate, thereby effectively reducing the tension on the substrate of the electrode plate, guaranteeing the flatness of the coating on the surface of the substrate of the electrode plate after drying, and allowing for good charge and discharge performance of the produced electrode plate. Moreover, the conveyor belt 520 being arranged passing through the oven 510 allows the front portion of the substrate of the electrode plate to be fixed to the side of the conveyor belt 520 outside the oven 510, and then the substrate of the electrode plate is driven by the conveyor belt 520 to pass through the oven 510, without the need for manually making the substrate of the electrode plate pass through the oven 510, thereby avoiding the risk of scalding, and removing the need to lower the temperature of the oven 510, effectively guaranteeing the production efficiency of the electrode plate. In addition, the blowing mechanism 530 is provided on the side of the substrate of the electrode plate away from the conveyor belt 520. The blowing mechanism 530 blowing gas onto the substrate of the electrode plate can not only accelerate the drying speed for the active material on the substrate of the electrode plate, but also allow the substrate of the electrode plate to tightly abut against the conveyor belt 520, guaranteeing the flatness of the substrate of the electrode plate, while making the active material on the surface of the substrate of the electrode plate be subj ected to the pressure of the gas to remain flat during the drying process, effectively avoiding warping, wrinkling, cracking, and the like of the active material during drying which otherwise affects the performance of the electrode plate in subsequent operations.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A drying apparatus, configured to dry a component to be dried and comprising:
an oven;
a conveyor belt, wherein the conveyor belt passes through the oven, the component to be dried is placed on a side of the conveyor belt, and the conveyor belt is configured to convey the component to be dried; and
a blowing mechanism, provided on a side of the component to be dried away from the conveyor belt and configured to blow gas onto the component to be dried to make the component to be dried abut against the conveyor belt;
wherein the conveyor belt is a steel sheet.

2. The drying apparatus according to claim 1, wherein the drying apparatus comprises a drive mechanism; and
the drive mechanism comprises at least two drive rollers, wherein the steel sheet is connected to surfaces of the drive rollers in an annular manner, and the drive rollers, when rotating, drive the steel sheet to perform conveying.

3. The drying apparatus according to claim 1, wherein the drying apparatus comprises a drive mechanism; and
the drive mechanism comprises a winding shaft and an unwinding shaft respectively provided at two ends outside the oven, wherein the steel sheet is wound around the winding shaft and the unwinding shaft, and the winding shaft and the unwinding shaft, when rotating, drive the steel sheet to perform conveying.

4. The drying apparatus according to claim 2 or 3, wherein the steel sheet is provided with through holes.

5. The drying apparatus according to any one of claims 1 to 4, wherein the blowing mechanism is provided with a heater inside, and the heater is configured to heat the gas.

6. The drying apparatus according to any one of claims 1 to 5, wherein the drying apparatus further comprises a heating mechanism, and the heating mechanism is disposed on a side of the conveyor belt away from the component to be dried and configured to transfer heat to the conveyor belt to heat the component to be dried.

7. The drying apparatus according to claim 6, wherein the heating mechanism is covered with a heat preservation cover outside, and the heat preservation cover is provided with an opening on a side facing the conveyor belt to transfer heat to the conveyor belt.

8. The drying apparatus according to any one of claims 1 to 7, wherein the oven is provided with a gas return port at a position opposite the blowing mechanism, and the gas return port is connected to the blowing mechanism via a gas return mechanism to allow the gas blown into the oven by the blowing mechanism to flow back into the blowing mechanism.

9. The drying apparatus according to claim 8, wherein the gas return mechanism is provided with a condenser inside, and the condenser is configured to condense water vapor in the gas return mechanism.

10. The drying apparatus according to any one of claims 1 to 9, wherein a cleaning mechanism is provided at a position downstream of the oven on a conveying path of the conveyor belt, and the cleaning mechanism is configured to clean the conveyor belt.

11. The drying apparatus according to claim 10, wherein the cleaning mechanism comprises a cleaning tank and a pressing structure, and the pressing structure abuts against the conveyor belt to press the conveyor belt into the cleaning tank.

12. The drying apparatus according to claim 10 or 11, wherein a drying mechanism is provided at a position downstream of the cleaning mechanism on the conveying path, and the drying mechanism is configured to dry the conveyor belt.

13. Electrode plate drying equipment, comprising the drying apparatus according to any one of claims 1 to 12, wherein the component to be dried is an electrode plate.
